# EUROPEAN PATENT APPLICATION

(11) **EP 3 330 039 A1**
(43) Date of publication of application: **06.06.2018**
(21) Application number: 16830260.2
(22) Date of filing: 07.07.2016
(51) Int. Cl.: B23K 35/14, B23K 35/26, B23K 35/28, B23K 35/40, C22C 11/00, C22C 13/00, C22C 18/04

(54) **COATED SOLDER WIRE AND METHOD FOR MANUFACTURING SAME**

(30) Priority: 27.07.2015 JP 2015147436; 28.10.2015 JP 2015212063
(71) Applicant: Sumitomo Metal Mining Co., Ltd., Tokyo 105-8716 (JP)
(72) Inventor: KOBAYASHI Hiroshi, Ome-shi Tokyo 198-8601 (JP); MIYAUCHI Kyoko, Ome-shi Tokyo 198-8601 (JP); YAMABE Hidetoshi, Ome-shi Tokyo 198-8601 (JP)
(74) Representative: TBK
(86) International application number: PCT/JP2016/070135
(87) International publication number: WO 2017/018155

(57) **Abstract**

Provided is coated solder wire that is manufactured on an industrial scale, and that by uniformly forming a dense coating film over the entire surface of solder wire in a one-time process is able to prevent oxidation of the surface during long-term storage and during melting, and has excellent wettability and bonding property. A 1 nm to 100 nm thick coating film that mainly includes a phosphorus-containing compound is formed on the surface of a solder wire by mixing a reaction gas that is plasmatized under atmospheric pressure and an organic phosphorus compound that is introduced via a carrier gas, radicalizing the organic phosphorus compound, forming a reaction area that is defined by a helical shaped gas flow and in which radicalized organic phosphorus compound is uniformly dispersed, and causing the metal on the surface of the solder wire to react with the radicalized organic phosphorus compound inside the reaction area.

## Description

### TECHNICAL FIELD

The present invention relates to coated solder wire that is used when manufacturing a semiconductor device, and to a manufacturing method for that coated solder wire.

### BACKGROUND ART

In the manufacture of a semiconductor element bonding substrate, semiconductor device or the like, when bonding metal materials together, or when bonding electronic parts such as semiconductor elements and the like to a printed circuit board, soldering is generally used. The solder material that is used for soldering is formed into various shapes such as a wire, a ribbon, a sheet, a pre-formed material (punched material), a ball, a fine powder and the like.

Solder material oxidizes easily in the presence of oxygen, and when stored, an oxide film is formed on the surface of the solder material. Particularly, when solder material is used after a long time has passed since the manufacture of the material, oxidation advances and the oxide film becomes thick, which leads to a decrease in the wettability or bonding property of the solder material, or boding defects such as the occurrence of gaps (voids) occur. In addition, solder material melts at high temperature when used, so the oxide film becomes even thicker. When this kind of thick oxide film occurs on a bonding interface, problems occur such as bad conduction or a decrease in the bonding property at the bonded area.

As technology for preventing oxidation of metal material and alloy material, a method is known in which a coating film is formed by surface processing. Particularly, surface processing that uses an atmospheric pressure plasma CVD method is such that a dense coating film can be formed at comparatively low cost, so not only is the effect for preventing oxidation high, but there is also no scattering of film-formation materials inside the room, so this method is attracting much attention as a method having excellent safety.

For example, JP2004510571 (A) describes a method in which by introducing liquid-spray coating forming material that includes an organic silicon compound into atmospheric pressure plasma discharge and exposing a substrate of metal or the like with this spray coating forming material, a coating (coating film) that includes polydimethylsiloxane is formed on the substrate surface.

However, in this method, plasmatization of reaction gas and activation of atomized spray coating forming material are performed at the same time, so activation of the spray coating forming material becomes non-uniform, and it is difficult to uniformly form a dense coating film over the entire surface of the substrate. Moreover, this method is not intended for preventing the oxidation of the surface of solder material, therefore, this method does not take into consideration the behavior of the coating film during melting of the solder material, or the effect that the existence of a coating film has on the wettability or bonding property of the solder material.

In regard to this, JP2014195831 (A) describes a manufacturing method for a coated solder material in which a 4 nm to 200 nm thick polysiloxane coating film is formed by radicalizing an organic silicon compound by spraying and mixing an organic silicon compound together with a carrier gas, and while polymerizing the radicalized organic silicon compound, causing that radicalized organic silicon compound to react with the metal that is present on the surface of the solder material. With this method, it is possible to instantaneously radicalize the organic silicon compound, so it is possible to uniformly form a dense coating film over the entire surface of the solder material while maintaining the basic skeleton of the organic silicon compound. Therefore, with this method, it is possible to prevent oxidation during long-term storage and during melting without impairing the wettability and bonding property of the solder material.

### [Related Literature]

### [Patent Literature]

[Patent Literature 1] JP2004510571 (A)
[Patent Literature 2] JP2014195831 (A)

### SUMMARY OF INVENTION

### [Problem to be Solved by Invention]

However, when the method described in 2014195831 (A) is applied as is to manufacturing on an industrial scale, there is room for improvement of the uniformity of the thickness of the overall coating film. Moreover, for a coated solder wire, there is a need for further improvement of the wettability and bonding property of the coating material.

Therefore, the object of the present invention is to make it possible to prevent oxidation of the surface of a solder wire during long-term storage and during melting by uniformly forming a dense coating film over the entire surface of the solder wire, and to more efficiently provide a coated solder wire that has a more excellent wettability and bonding property than conventional coated solder wire by manufacturing the coated solder wire on an industrial scale.

### [Means for Solving Problems]

The coated solder wire of the present invention includes solder wire, and a coating film that includes a phosphorus-containing compound that is formed on the surface of the solder wire, and that has a thickness within the range of 1 nm to 100 nm.

Preferably, the thickness of the coating film is in the range of 3 nm to 80 nm, and more preferably in the range of 5 nm to 50 nm.

Preferably, the difference between the maximum value and the minimum value of the coating film is 2.5 nm or less, and more preferably is 2.0 nm or less, and even more preferably is 1.5 nm or less.

As an index indicating the characteristics of the coated solder wire of the present invention, for bonded solder that is obtained by bonding the coated solder wire at a bonding temperature of 340°C to 350°C, when the maximum diameter in the plan view of the bonded solder is taken to be X, the diameter in a direction orthogonal to the extending direction of the maximum diameter X is taken to be Y, and the height of the bonded solder is taken to be Z, the aspect ratio that is found by the equation ((X+Y)/2)/Z is taken to be A_{c}, and for uncoated solder wire that has the same composition as the solder wire, when the aspect ratio that is found in the same way as the coated solder wire is taken to be Aₙ, the ratio (A_{c}/Aₙ) of the aspect ratio A_{c} of the coated solder wire with respect to the aspect ratio Aₙ of the non-coated solder wire is within the range 1.6 to 3.0, and the coated solder wire displays much higher wettability than the non-coated solder wire.

More preferably the ratio (A_{c}/Aₙ) is in the range of 1.7 to 2.8, and even more preferably is in the range of 1.8 to 2.5.

The present invention can be arbitrarily applied to solder wire having various compositions, however, particularly, the present invention can be suitably applied to solder wire that is made from a solder alloy that includes Pb at 80% by mass or more, and one or more type of secondary element that is selected from among the group of Sn, Ag, Cu, In, Te and P, with the total amount of Pb and secondary element included being 95% by mass or more.

Moreover, the present invention can be suitably applied to solder wire that is made from a solder alloy that includes Sn at 80% by mass or more, and one or more type of secondary element that is selected from among the group of Ag, Sb, Cu, Ni, Ge and P, with the total amount of Sn and secondary element included being 95% by mass or more.

Alternatively, the present invention can be suitably applied to solder wire that is made from a solder alloy that includes Zn at 90% by mass or more, Al at no less than 2.0% by mass and no greater than 9.0% by mass, and one or more type of third element that is selected from among the group of Ag, Ge and P, and when Ag is included, Ag is included at no less than 0.1% by mass and no greater than 4.0% by mass, and when Ge is included, Ge is included at no less than 0.01% by mass and no more than 2.00% by mass, and when P is included, P is included at no greater than 0.5000% by mass.

The manufacturing method for coated solder wire of the present invention includes:
a radicalization step for forming a radicalized organic phosphorus compound by mixing a reaction gas that is plasmatized under atmospheric pressure and an organic phosphorus compound that is introduced via a carrier gas, and radicalizing the organic phosphorus compound;
a reaction area formation step for forming a reaction area that is defined by a helical shaped gas flow and in which the radicalized organic phosphorus compound is uniformly dispersed; and
a coating step for forming a 1 nm to 100 nm thick coating film that includes a phosphorus-containing compound on the surface of a solder wire by transporting the solder wire inside the reaction area and causing the radicalized organic phosphorus compound to react with metal on the surface of the solder wire.

In the reaction area formation step, the reaction area is preferably formed by mixing the radicalized organic phosphorus compound in a pre-introduced helical shaped gas flow. In this case, the helical shaped gas flow can be formed by using at least one type of gas selected from among the group argon, helium, nitrogen, oxygen and air.

At least one type that is selected from among trimethyl phosphate, triethyl phosphate, tributyl phosphate, tripentyl phosphate, bis (2-ethylhexyl) hydrogenphosphate, triphenyl phosphate, trimethyl phosphite, triethyl phosphite, tributyl phosphite, tripentyl phosphite, bis (2-nonylphenyl) hydrogenphosphite, and triphenyl phosphite can be used as the organic phosphorus compound.

At least one kind of gas that is selected from among the group of argon, helium, nitrogen, oxygen and air can be used as the reaction gas. Moreover, at least one kind of gas that is selected from among the group of argon, helium, and nitrogen can be used as the carrier gas.

In the radicalization step, preferably the organic phosphorus compound is radicalized by an atmospheric-pressure polymerization processing apparatus.

In the radicalization step, the amount of the organic phosphorus compound that is introduced per 1 m of solder wire is preferably in the range of 0.005g to 0.560g. The amount of the organic phosphorus compound that is introduced per 1 m of solder wire is more preferably in the range of 0.016 g to 0.450 g, and even more preferably is in the range of 0.028 to 0.280 g.

Moreover, the transporting speed for transporting the solder wire in the coating step is preferably 1 m/min to 100 m/min, and more preferably is 5 m/min to 80 m/min, and even more preferably is 10 m/min to 50 m/min.

### [Effect of Invention]

With the present invention, a coated solder wire is provided such that a dense coating film that includes a phosphorus-containing compound as a main component is uniformly formed over the entire surface of the solder wire. By using this coated solder wire, it is possible to effectively prevent oxidation of both the surface of the solder wire surface that is the surface of bonded solder during long-term storage and during melting.

Furthermore, by employing a phosphorus-containing compound as the main component of the coating film, the coated solder wire of the present invention displays more excellent wettability and bonding property than conventional non-coated solder wire and solder wire that includes a coating film that is made from polysiloxane.

In addition, with the manufacturing method for coated solder wire of the present invention, it is possible to efficiently obtain this kind of coated solder wire in a one-time process.

Therefore, the present invention has extremely large industrial significance.

### BRIEF DESCRIPTION OF DRAWINGS

FIG. 1A is a perspective view for explaining the manufacturing method for coated solder wire according to the present invention; and FIG. 1B is a cross-sectional view of coated solder wire that is obtained by this method.
FIG. 2(A-1) to FIG. 2(C-1) are perspective views for explaining the steps of a conventional manufacturing method for coated solder wire; and FIG. 2(A-2) to FIG. 2(C-2) are cross-sectional views of coated solder wire in each of the steps.

### [MODES FOR CARRYING OUT INVENTION]

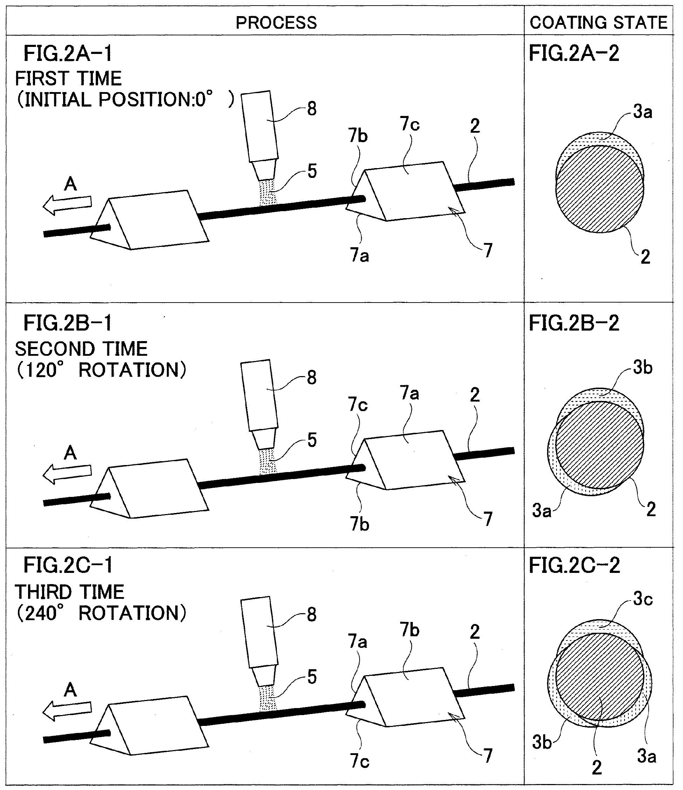

As illustrated in FIGS. 2(A-1) to 2(C-2), when coating the entire surface of long solder wire by applying the method described in JP2014195831(A) to manufacturing on an industrial scale, it is necessary to perform a coating step plural times (three times in the example illustrated in the figures) on the solder wire 2 that is the base material. In other words, it is necessary that:
(a) a transporting jig 7 that is capable of preventing twisting of solder wire 2 during transporting is fastened so that a surface 7a becomes the bottom-surface side, and in this state, the solder wire 2 is sprayed with a radicalized organic silicon compound 5 from a nozzle 8 while the solder wire 5 is being transported, to form a coating film 3a (refer to FIG. 2(A-1);
(b) next, the transporting jig 7 is rotated 120° so that a surface 7b becomes the bottom-surface side, and then in the same way as performed in (a), a coating film 3b is formed (refer to FIG. 2(B-1)); and
(c) finally, the transporting jig 7 is rotated another 120° so that a surface 7c becomes the bottom-surface side, and then in the same way as performed in (a) and (b), a coating film 3c is formed (refer to FIG. 2(C-1)).

In this way, when the technology described in JP2014195831(A) is applied to manufacturing on an industrial scale, it is necessary to perform the coating step three times, so there is a problem in that productivity of the coated solder wire is insufficient. Moreover, as illustrated in FIG. 2(C-2), in the coated solder wire that is finally obtained, there are portions on the boundaries of the coating films 3a to 3c where the coating is thin, so there is also a problem in that uniformity of the thickness of the overall coating is insufficient.

Furthermore, in the technology described in JP2014195831(A), polysiloxane is used as the material for the coating film. Coating film that uses polysiloxane when compared with conventional uncoated solder wire not only has a function of preventing the advancement of oxidation of the solder wire during long-term storage and during melting, but also gives the solder wire wettability and a bonding property that is equivalent to that of conventional solder wire. However, there is still a need for further improvement of the wettability and bonding property for solder wire, and coated solder wire that is provided with a coating film that uses polysiloxane cannot sufficiently satisfy this demand.

The inventors of the present invention, as a result of repeated study of the problems described above, learned that by using a phosphorous-containing compound instead of polysiloxane as the material for the coating film further improvement of the wettability and bonding property can be obtained.

Moreover, it was learned that when forming the coating film, by radicalizing the organic phosphorous compound that will become the material of the coating film beforehand, then forming a reaction area in which the radicalized organic phosphorous compound is uniformly dispersed, transporting the solder wire into this reaction area, and causing a reaction between the radicalized organic phosphorous compound with the metal on the surface of the solder wire, it is possible to form a very uniform and dense coating film in a one-time process.

The present invention was accomplished based on this knowledge. In the following, the present invention will be explained in detail by dividing the explanation into "1. Coated Solder Wire", "2. Manufacturing Method for Coated Solder Wire", and "3. Die Bonding Method Using Covered Solder Wire". The coated solder wire of the present invention is not limited by the diameter of the solder wire that is used as the base material, however, in the following, an example will be explained in which typically used solder wire having a diameter of 0.3 mm to 1.0 mm is used as the base material.

### 1. Coated Solder Wire

The coated solder wire of the present invention includes solder wire, and a coating film that includes a phosphorous-containing compound that is formed on the surface of the solder wire.

### (1) Solder Wire

In the present invention, the composition of the solder wire is arbitrary, and the present invention can be applied to solder wire having various compositions. However, the effect of the present invention is suitably obtained when solder wire having the following composition is used. The composition of solder wire can be found by ICP emission spectroscopy.

### a) Pb type solder wire

Pb type solder wire is composed of a solder alloy that includes lead (Pb) as the main component, and has one or more secondary element that is selected from the group of tin (Sn), silver (Ag), copper (Cu), indium (In), tellurium (Te), and phosphorous (P). Having Pb as the main component means that the content of Pb with respect to the entire solder alloy is 80% by mass or greater.

This kind of Pb type solder wire is extremely versatile, and conventionally has been used for various uses. In recent years, taking into consideration the effect on people and the environment, the use of Pb is restricted, however, from the aspect of the versatility and ease of use, Pb type solder wire is still currently being used for some uses such as bonding of power devices.

In Pb type solder wire, the total content of Pb and second element is 95% by mass or greater, and preferably 97% by mass or greater. When the total content of Pb and second element is less than 95% by mass, it is difficult to obtain the characteristics described above.

The content of Pb is preferably 80% by mass or greater and less than 98% by mass, and more preferably is 85% by mass or greater and less than 98% by mass. Moreover, the content of the second element is preferably 2% by mass or greater and less than 15% by mass, and more preferably is 2% by mass or greater and less than 12% by mass.

Moreover, Pb type solder wire, depending on the use and purpose of the solder wire, may also include an element (third element) other than Pb and the second element. As this kind of third element, it is possible to use nickel (Ni), germanium (Ge), cobalt (Co), antimony (Sb), bismuth (Bi) and the like. The content of the third element is preferably 5.0% by mass or less, and more preferably is 4.5% by mass or less. When the content of the third element exceeds 5.0 % by mass, it may not be possible to obtain the desired characteristics due to the relationship with the content of Pb and the second element.

### b) Sn type solder wire

Sn type solder wire is composed of a solder alloy that includes tin (Sn) as the main component, and has one or more second element that is selected from the group of Ag, Sb, Cu, Ni, Ge and P. Having Sn as the main component means that the content of Sn with respect to the entire solder alloy is 80% by mass or greater.

This kind of Sn type solder wire has a low melting point and can be preferably applied to uses such as in semiconductor devices and the like, and is used as a so-called "lead-free solder". Here, "lead free" means that absolutely no lead is included, or in the case that lead is included as an unavoidable impurity, the lead content is less than 0.01 % by mass.

In Sn type solder wire, the total content of Sn and second element is 95% by mass or greater, and preferably 97% by mass or greater. When the total content of Sn and second element is less than 95% by mass, it is difficult to obtain the characteristics described above.

The content of Sn is preferably 80% by mass or greater and less than 98% by mass, and more preferably is 90% by mass or greater and less than 98% by mass. Moreover, the content of the second element is preferably 1% by mass or greater and less than 10% by mass, and more preferably is 2% by mass or greater and less than 7% by mass.

Moreover, Sn type solder wire, depending on the use and purpose of the solder wire, may also include an element (third element) other than Sn and the second element. As this kind of third element, it is possible to use In, Co, Bi and the like. The content of the third element is preferably 5.0% by mass or less, and more preferably is 3.0% by mass or less. When the content of the third element exceeds 5.0 % by mass, it may not be possible to obtain the desired characteristics due to the relationship with the content of Sn and the second element.

### c) Zn type solder wire

Zn type solder wire is composed of a solder alloy that includes zinc (Zn) at a content of 90% by mass or greater, and aluminum (Al) at a content of no less than 2.0% by mass and no greater than 9.0% by mass, and furthermore includes has one or more third element that is selected from the group of Ag, Ge and P; wherein when Ag is included, the content of Ag is no less than 0.1% by mass and no greater than 4.0% by mass; when Ge is included, the content of Ge is no less than 0.01% by mass and no greater than 2.00% by mass; and when P is included, the content of P is 0.5000% by mass or less.

This kind of Zn type solder wire has a high melting point and particularly can be preferably applied to uses such as in semiconductor parts such as power devices, and the like, and is used as a so-called "high-temperature lead-free solder". Here, "lead free" means that absolutely no lead is included, or in the case that lead is included as an unavoidable impurity, the lead contents is less than 0.01 % by mass.

In Zn type solder wire according to the present invention, the content of Zn is 90% by mass or greater, and the content of Al is no less than 2.0% by mass and no greater than 9.0% by mass, and the reason for this compositional range is as described in the following. Zn and Al generate a eutectic alloy at a eutectic point at which the content of Al is 5.0% by mass, and a solder alloy having excellent flexibility and workability can be formed. Furthermore, the temperature at the eutectic point of Zn-Al solder alloy is 381°C, so Zn-Al solder alloy has a melting point that is suitable for high-temperature uses, and particularly to bonding of SiC and the like. In this way, Zn-Al solder alloy is an excellent solder alloy, however, in order to improve and adjust various properties, it is also possible to include one or more kind of element selected from among the group Ag, Ge and P in the Zn-Al solder alloy of the present invention.

As can be seen from the plating on a substrate, Ag has excellent reactivity, so it can be spread widely over a bonding surface of Cu, Ni and the like. In addition, a lot of O can be dissolved and solidified in the alloy, so there is a large effect on improving the wettability. Therefore, Ag is included when there is mainly a desire to improve the wettability or bonding property. The content of Ag is no less than 0.1% by mass and no greater than 4.0% by mass. When the content of Ag is less than 0.1% by mass, the content is too low and so the effect of adding Ag does not substantially appear. However, when the content of Ag is greater than 4.0% by mass, the content is too high and more than the allowable amount of metal compound is generated, or causes a melting and parting phenomenon to occur, so is not preferable.

Moreover, the effect that is obtained by including Ge is mainly the improvement of wettability. However, the mechanism of the effect of Ge for improving the wettability is different from that of Ag. Of the elements of the alloy composition, the specific weight of Ge is light, so it is easy for Ge to be present on or near the surface of the melted solder. When that happens, the Ge that is present on or near the surface of the solder is in the mother phase, so suppresses oxidation of Al or Zn that oxidize easily. According to this principle, by adding Ge, the wettability during bonding is improved. Furthermore, in the stored state of the solder alloy, Ge is effective in suppressing oxidation of the mother phase, and preventing oxidation of the solder. The content of Ge that has this kind of excellent effect is no less than 0.01% by mass and no greater than 2.00% by mass. When the content of Ge is less than 0.01% by mass, the content is too low so the effect of adding Ge does not substantially appear. However, when the content of Ge is greater than 2.00% by mass, brittleness of the phase including Ge becomes remarkable, so the workability of the solder alloy, and stress relaxation property decrease, which is not preferred.

When the solder alloy of the present invention includes P, the content of P is preferably 0.500% by mass or less. P is very strongly reducible, so even when a very small amount is included, an effect of improving wettability is obtained, however, even when the content is greater than 0.500% by mass, the effect of improving wettability does not change much, however, due to the excessive content, there is a possibility that gas that includes P or oxides that include P will be generated in a large amount, causing the void fraction inside the solder to increase, or causing the P to form a brittle phase and segregate, making the solder bond brittle and lowering the bonding reliability.

### (2) Coating Film

### a) Components

The coating film of the present invention mainly includes a phosphorus-containing compound. Here, the phosphorus-containing compound is a polymer that includes P in the structure.

In the present invention, the type of polymer that includes P as the phosphorus-containing compound is arbitrary, however, from the aspect of preventing the advancement of oxidation of the solder wire surface, and from the aspect of further improving the wettability and bonding property during bonding to a substrate, the polymer preferably includes polyphosphoric acid, polyphosphoric ester, polyphosphate, and three-dimensional cross-linked products of these whose main components are represented by the following formula.

This kind of coating film that is composed mainly of a polymer that includes P has a high density, and this coating film can give solder wire excellent oxidation resistance. Moreover, during bonding to a substrate, due to the reducing action of P, and because P oxidizes and turns into a gas and evaporates, P has a characteristic of not remaining at the bonded area, so this coating film is able to further improve the wettability and bonding property of solder at the bonding area.

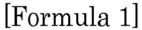

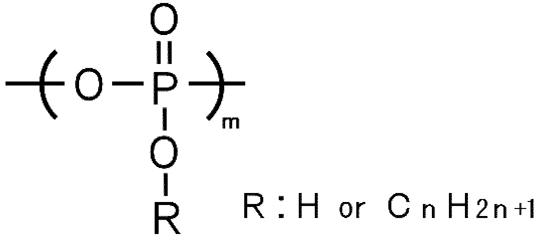

The coating film of the present invention mainly includes a phosphorus-containing compound. However, in the present invention, as will be described later, an atmospheric pressure plasma polymerization method is applied for forming the coating film, so due to the nature of the atmospheric pressure plasma polymerization method, in addition to a phosphorus-containing compound as the main component, a carbon component, hydrocarbons, and the like may also be included. Moreover, in addition to a phosphorus-containing compound, it is also possible to include an arbitrary additive such as an antioxidant, conductive fine particles, a coupling agent and the like.

The content of components other than the phosphorus-containing compound in the coating film is preferably 10% by mass or less, and more preferably 5% by mass or less.

### b) Thickness

The thickness of the coating film is controlled to be 1 nm to 100 nm, and preferably 3 nm to 80 nm, and more preferably 5 nm to 50 nm. When the thickness of the coating film is less than 1 nm, it is not possible to sufficiently suppress the advancement of oxidation of the solder wire surface, and problems such as a decrease in the wettability and bonding property, and the occurrence of gaps (voids) may occur. On the other hand, when the thickness of the coating material is greater than 100 nm, even though it is possible to suppress the advancement of oxidation of the solder wire surface, due to the effect of the coating film, a decrease in the wettability and bonding property, and the occurrence of gaps (voids) may occur.

The thickness of the coating film can be found by cutting the coated solder wire along the length direction at three or more positions in the circumferential direction, and observing the respective cross sections using a transmission electron microscope (TEM).

### c) Uniformity of Thickness

This coating film also has excellent uniformity of thickness. More specifically, in the coated solder wire of the present invention, the difference between the maximum value and the minimum value of the thickness (dimension in the radial direction) of the coating film over the entire coated solder wire (length direction and circumferential direction) can be controlled to be within 2.5 nm, and preferably within 2.0 nm and more preferably within 1.5 nm. Therefore, the coated solder wire of the present invention can be said to have very small variation in characteristics such as oxidation resistance, wettability, bonding property and the like.

### d) Characteristics

The coating film of the coated solder wire of the present invention can be evaluated as having a strong bond with the metal of the solder wire surface, and as having excellent uniformity of thickness regardless of being formed to be extremely thin. Therefore, it is possible to suppress the advancement of oxidation on the solder wire surface, and as a result, it is possible to improve the wettability and bonding property of the solder wire, and effectively suppress the occurrence of gaps (voids).

Moreover, by forming the coating film using mainly a phosphorous-containing compound, the wettability of the coated solder wire of the present invention is further improved compared with a coated solder wire of which the coating film is formed using polysiloxane.

Particularly, in the present invention, for the evaluation of the wettability of the coated solder wire, this coated solder wire is used, and the roundness and aspect ratio of the bonded solder that is obtained by die bonding described later is used.

More specifically, the heater temperature (bonding temperature) of the die bonder is set to be 340°C to 380°C, and preferably 340°C to 350°C, a temperature that is higher than the melting point of the solder wire by 50°C or more, then the coated solder wire is supplied to the top of a Cu substrate or the like and the coated solder wire is melted to obtain bonded solder. As a comparison, bonded solder is obtained using the same die bonding and a non-coated solder wire.

Using an observation method such as a microscope or the like, the length in a direction having the maximum diameter in the plan view of a sample of the bonded solder is measured and that measurement is taken to be maximum diameter X. The diameter in the direction orthogonal to the direction that the maximum diameter X extends is taken to be diameter Y. Furthermore, the height of the bonded solder is measured and is taken to be height Z.

The roundness is obtained from the measurement values of each sample, using the equation: "Y/X". For the non-coated solder wire, the roundness is 0.87 or greater at a bonding temperature of 360°C to 380°C, however the roundness suddenly worsens at a bonding temperature of 340°C to 350°C. However, in the case of the coated solder wire of the present invention, as long as the bonding temperature is within the range 340°C to 380°C, for all cases, the roundness is 0.87 or greater, and preferably becomes 0.88 or greater.

The aspect ratio is obtained from the measurement values for each of the samples using the equation: "((X+Y)/2)/Z".

The aspect ratio Aₙ for the non-coated solder wire is in a range of about 7.2 to 9.2 at a bonding temperature of 360°C to 380°C, however, worsens to a range of about 2.8 to 4.5 at a bonding temperature of 340°C to 350°C.

However, the aspect ratio A_{c} for the coated solder wire of the present invention is good and in a range of about 8.0 to 11.0 at a bonding temperature of 360°C to 380°C, and is also good and in a range of about 7.0 to 10.8 even at a bonding temperature of 340°C to 350°C. In other words, the coated solder wire of the present invention has good wettability at high bonding temperatures, and even when the bonding temperature is lowered, good wettability with respect to the substrate such as a Cu substrate can be maintained. Therefore, with die bonding using the coated solder wire of the present invention, it is possible to stably form a bonded section that has wettability and a bonding property that is equivalent to or better than conventional solder wire.

In the present invention, particularly, as an index for indicating this wettability, bonded solder having a bonding temperature of 340°C to 350°C and in which a difference with conventional solder wire clearly appears is obtained, and in this case, the ratio of the aspect ratio A_{c} of the coated solder wire of the present invention with respect to the aspect ratio Aₙ that is found for the non-coated solder wire (A_{c}/Aₙ) is used. By using this ratio (A_{c}/Aₙ), it becomes possible to suitably evaluate the wettability even when there are changes in the composition of the solder wire and in bonding characteristics other than the bonding temperature.

In the present invention, this ratio (A_{c}/Aₙ) is preferably within the range 1.6 to 3.0, and more preferably within the range 1.7 to 2.8, and even more preferably within the range 1.8 to 2.5. When this ratio (A_{c}/Aₙ) is less than 1.6, it cannot be said that there is sufficient superiority when compared with the conventional solder wire. On the other hand, when this ratio (A_{c}/Aₙ) is greater than 3.0, the coated solder wire cannot be applied as a bonded section due to bonding abnormality.

Furthermore, the coating film of the coated solder wire of the present invention is colorless and transparent, and as described above, even though it is formed to be extremely thin, the coating film has excellent uniformity of thickness, so there is hardly any occurrence of defective appearance such as processing unevenness, spots or the like.

### 2. Manufacturing Method for Coated Solder Wire

The manufacturing method for the coated solder wire of the present invention includes:
(1) a radicalization step for forming a radicalized organic phosphorus compound by mixing a reaction gas that is plasmatized at atmospheric pressure and an organic phosphorus compound that is introduced via a carrier gas, then radicalizing the organic phosphorus compound;
(2) a reaction-area-forming step for forming a reaction area that is defined by a helical gas flow, and in which the radicalized organic phosphorus compound is uniformly dispersed; and
(3) a coating step for forming a 1 nm to 100 nm thick coating film that includes a phosphorus-containing compound on the surface of a solder wire by transporting the solder wire inside the reaction area and allowing the radicalized organic phosphorus compound react with the metal on the surface of the solder wire.

With this kind of manufacturing method, a dense coating film that mainly includes a phosphorus-containing compound can be uniformly formed on a solder wire in a one-time process, so it is possible to greatly improve the productivity thereof. Moreover, this manufacturing method uses an organic phosphorus compound that is normally in a liquid state as the coating material, and the coating film is formed using a dry method, so not only is handling easy, the method is also excellent in terms of safety.

### (1) Radicalization step

The radicalization step is a process for forming a radicalized organic phosphorus compound by introducing via a carrier gas an organic phosphorus compound that will be the phosphorus-containing compound that is the main component of the coating film, mixing a reaction gas that is plasmatized at atmospheric pressure with the organic phosphorus compound, and radicalizing the organic phosphorus compound.

### a) Atmospheric pressure plasma polymerization process

A plasma polymerization process is a conventional technique that is widely known, however, the atmospheric-pressure plasma polymerization process that is used in the present invention is a process that causes a chemical reaction that does not proceed under normal conditions to proceed by activating reactive particles using atmospheric-pressure plasma. This kind of atmospheric-pressure polymerization process is suited to continuous processing, so productivity is high, there is no need for a vacuum apparatus, so processing cost is low, and it is possible to simplify the apparatus configuration.

As atmospheric-pressure plasma, it is possible to use corona discharge, dielectric barrier discharge, RF discharge, microwave discharge, arc discharge and the like, and in the present invention, the atmospheric-pressure plasma is not particularly limited and all can be applied. Therefore, as the apparatus that is used for performing plasmatization, as long as it is possible to plasmatize the reaction gas under atmospheric pressure, the apparatus is not particularly limited, and it is possible to use a known plasma generating apparatus. In the present invention, atmospheric pressure includes atmospheric pressure (1013.25 hPa) and pressure near atmospheric pressure, and also atmospheric pressure within a range of normal change in the atmospheric pressure is included.

However, in the present invention, it is necessary to spraying and mixing an organic phosphorus compound into a reaction gas which is previously plasmatized via a carrier gas. By adopting this constitution, it is possible to instantaneously radicalize the organic phosphorus compound, so it is possible to form a phosphorus-containing compound which mainly composes a coating film so as to be dense and uniform over the entire surface of the solder wire while maintaining the basic skeleton of the organic phosphorus compound.

In regard to this, in a formation method for coating film that uses a conventional atmospheric pressure plasma CVD method, plasmatization of the reaction gas and radicalization of the coating material are performed simultaneously after the reaction gas, carrier gas and coating material are supplied into the apparatus, so radicalization of the coating material becomes non-uniform. As a result, the coating film does not become dense, and uniformly forming the coating film over the entire surface of the solder wire becomes difficult.

### b) Plasmatization Conditions

As conditions for plasmatizing the reaction gas, the conditions should be suitably selected according to the plasma apparatus used, or the target thickness of the coating film, however, from the aspect of efficiently radicalizing the organic phosphorus compound and forming a high-quality coating film, the generator output voltage is preferably within the range 150V to 350V, and more preferably is within the range 200V to 330V. When the generator output voltage is less than 150V, it is not possible to sufficiently plasmatize the reaction gas, so it may not be possible to sufficiently radicalize the hydrocarbons. On the other hand, when the generator output voltage is greater than 350V, a problem of apparatus damage may occur.

### c) Reaction Gas

The reaction gas is not particularly limited as long as the gas can be easily plasmatized, and for example, it is possible to use argon (Ar), helium (He), nitrogen (N₂), oxygen (O₂), air and the like. These reaction gases can be used alone, or it is also possible to use two or more types that are mixed at a specified ratio. From the aspect of production cost, using nitrogen, oxygen or a mixture of these, and particularly air is preferred.

### d) Carrier Gas

The carrier gas is not particularly limited as long as the carrier gas can transport a sprayed organic phosphorus compound. For example, argon (Ar), helium (He), nitrogen (N₂) and the like can be used. These carrier gases can be used alone, or two or more types can be mixed at a specified ratio. From the aspect of production cost, using nitrogen is preferred.

In the present invention, an organic phosphorus compound that is a liquid at normal temperature can be used as the coating material for forming a coating film. More specifically, it is possible to use at least one kind of organic phosphorus compound that is selected from among trimethyl phosphate, triethyl phosphate, tributyl phosphate, tripentyl phosphate, bis (2-ethylhexyl) hydrogenphosphate, triphenyl phosphate, trimethyl phosphite, triethyl phosphite, tributyl phosphite, tripentyl phosphite, bis (2-nonylphenyl) hydrogenphosphite, and triphenyl phosphite. Of these, trimethyl phosphate that is expressed by the formula given below has a boiling point of 197°C, is a colorless and odorless liquid, displays high stability in the air, and is easily handled, so can be suitably used industrially.

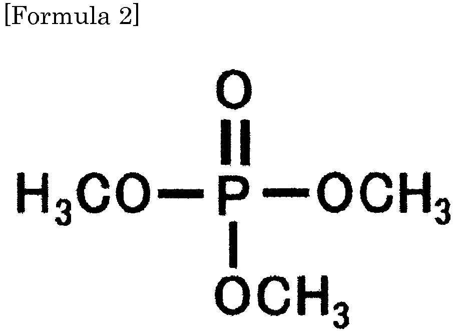

### f) Introduced Amount of Organic Phosphorus Compound

The amount of organic phosphorus compound that is introduced differs depending on the diameter of the solder wire on which a coating film is to be formed, the transporting speed of the solder wire, plasmatization conditions and the like, however, for typical solder wire (diameter: 0.3 mm to 1.0 mm) as a target, the amount of organic phosphorus compound that is introduced per 1 m of solder wire is preferably 0.005g to 0.560g, and more preferably 0.016g to 0.450g, and even more preferably 0.028g to 0.280g. When the amount of organic phosphorus compound that is introduced per 1 m of solder wire is less than 0.005g, the thickness of the coating film becomes 1 nm or less, and when the amount of organic phosphorus compound that is introduced per 1 m of solder wire is greater than 0.560g, there is a possibility that the thickness of the coating film will be greater than 100 nm.

### (2) Reaction Area Formation step

The reaction area formation step is a process for forming a reaction area that is defined by a helical gas flow, and in which the radicalized organic phosphorus compound that is obtained in the radicalization step is uniformly dispersed.

### a) Reaction Area

In the manufacturing method for coated solder wire of the present invention, forming a reaction area beforehand in which radicalized organic phosphorus compound is uniformly dispersed, and in which it is possible for organic phosphorus compound to react with the metal of the solder wire is important. As long as the organic phosphorus compound in this reaction area is radicalized, the state of the organic phosphorus compound is not limited, and can be in a monomer, a semi-polymer, or a polymer state.

The reaction area is defined by a helical shaped gas flow. This is because in a helical shaped gas flow in which radicalized organic phosphorus compound is uniformly dispersed, the reaction between the metal on the surface of the solder wire and the radicalized organic phosphorus compound advances at the same time and at about the same reaction rate, so the obtained coating film can be formed very uniformly.

The method for forming this kind of reaction area is not particularly limited. For example, the reaction area can be formed by introducing a helical shaped gas flow beforehand into an apparatus, and mixing radicalized organic phosphorus compound that is generated in a radicalization step with the helical shaped gas flow. Moreover, it is possible to perform the radicalization step outside the apparatus and introduce the generated radicalized organic phosphorus compound into the apparatus as helical shaped gas flow using a carrier gas. However, taking into consideration that radicalized organic phosphorus compound is unstable, and easily returns to being a normal organic phosphorus compound, using the former method is preferred.

### b) Helical Shaped Gas Flow

The helical shaped gas flow can be formed, for example, by introducing into an apparatus at least one kind of gas selected from among argon (Ar), helium (He), nitrogen (N₂), oxygen (O₂) and air, or in other words, a gas that is the same kind of gas as the carrier gas described above, or a mixture of these gases and a radicalized organic phosphorus compound that is generated outside the apparatus so as to flow in a helical shape. However, when forming a thin coating film, forming a helical shaped gas flow using oxygen or air (particularly, dry air) is preferred. This is because by using oxygen or air, it is possible to increase the amount of oxygen that is introduced into the coating film, and as result, it becomes possible to improve the density and smoothness of the coating film.

The helical shaped gas flow must be formed so that the cross-sectional area thereof is larger than the diameter of the solder wire that will be coated. Moreover, the speed of the helical shaped gas flow (speed in the advancing direction and the speed in the circumferential direction) must be suitably selected according to the thickness of the intended coating film and the property of the solder wire (reactivity with organic phosphorus compound). Therefore, setting the speed of the helical shaped gas flow after performing preliminary testing is preferred.

### (3) Coating step

The coating step is a process in which a coating film that includes a phosphorus-containing compound as the main component, and preferably is a phosphorus-containing compound, and having an thickness in the range 1 nm to 100 nm is formed on a solder wire surface by transporting the solder wire surface inside a reaction area and causing a radicalized organic phosphorus compound to react with the metal on the solder wire surface.

### a) Solder Wire

The solder wire of the coated solder wire of the present invention is not particularly limited, and various kinds of wire can be used. However, in order to sufficiently demonstrate the effect of the present invention, preferably a solder wire that is obtained by the molding method described below is used.

### [Melting of Raw Material]

As the method for melting raw material, it is possible to use a known method such as a resistance-heating method, a reduction-diffusion method, a high-frequency-dissolution method or the like, and particularly, a high-frequency-dissolution method in which the raw material can be efficiently melted in a short period of time is preferred. The raw material that is melted by these methods is formed into a solder mother alloy ingot having a specified shape by pouring the melted raw material into a mold that is prepared in advance. When oxygen is present during melting and pouring, not only does oxidation of the raw material advance, but an oxide film is formed during pouring and the oxide film on the surface of the obtained solder wire becomes thick and the surface roughness (Ra) of the solder wire becomes rough. Therefore, preferably, the atmosphere during melting of the raw material is an inert gas atmosphere, and during pouring, inert gas is made to flow at the molten metal inlet of the mold.

### [Solder Wire]

When molding wire-like solder, the solder mother alloy ingot is molded by an extrusion method or a wire-drawing method. For example, when molded by an extrusion method, it is necessary to select a suitable extrusion temperature according to the composition of the solder wire. This is because when the extrusion temperature is too high, it becomes easy for oxidation of the surface to advance, and conversely, when the extrusion temperature is too low, the solder wire is extruded in a hard state, so molding requires a long time.

Moreover, extrusion is preferably performed in an inert gas, and more preferably performed in a sealed state in which inert gas is allowed to flow. This is because when oxygen is present during extrusion, wire that is heated to the extrusion temperature oxidizes immediately.

### [Polishing and Washing]

In order to make the make the oxide film on the solder wire surface thinner, or reduce the surface roughness (Ra) of the solder wire, preferably acid washing or polishing of the solder wire is performed. The timing for performing acid washing and polishing could be timing after casting of the solder mother ingot, before performing specified processing, during processing, or after processing.

The type of acid used when performing acid washing is not particularly limited as long as the acid is suitably selected according to the composition of the solder wire, and it is possible to use either inorganic acid or organic acid, however, taking cost into consideration, preferably inexpensive inorganic acid that has a large oxide film removal effect is used. More specifically, as an inorganic acid, it is possible to use hydrochloric acid, sulfuric acid, nitric acid, phosphoric acid, acetic acid and the like. Moreover, as organic acid, it is possible to use citric acid, oxalic acid and the like. However, when a strong acid is used, the dissolution rate of solder wire into that acidic solution is fast, which may cause partial dissolution to advance, may cause the surface roughness (Ra) to increase, or may cause the composition to deviate. Therefore, preferably a weak acid having a slow dissolution rate and that is easy to handle is used. In acid washing, it is also necessary to take into sufficient consideration the acid concentration, the washing time and the washing temperature.

For example, when washing Pb type solder wire using a 5% aqueous acetic acid solution, preferably the washing temperature is 20°C and the washing time is 15 minutes. In this case, the oxide film of the solder wire is such that the amount of dissolution is the largest immediately after coming in contact with the aqueous acetic acid solution, then gradually decreases after that, and becomes saturated at a certain stage. More specifically, when washing a 100 µm thick oxide film, the thickness of the oxide film becomes a thin 20 µm to 30 µm in about 5 minutes, and becomes a thin 10 µm in about 10 minutes.

On the other hand, when polishing the solder wire surface, the polishing method is not particularly limited. For example, polishing may be performed by placing the solder wire between polishing paper, applying a suitable pressure and winding while pulling.

### b) Reaction between Radicalized Organic Phosphorus Compound and Metal of Solder Wire Surface

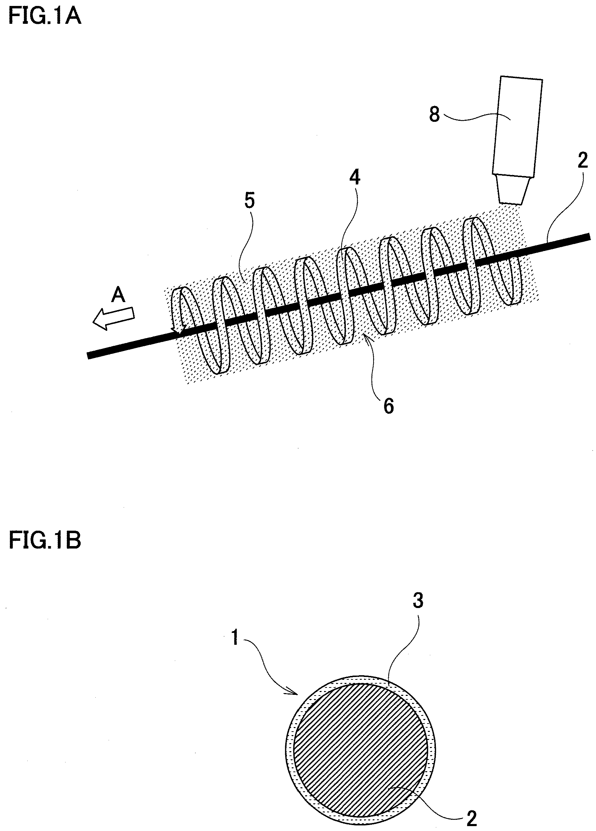

In the manufacturing method for a coated solder wire of the present invention, the reaction between the radicalized organic phosphorus compound and the metal of the solder wire surface advances inside the reaction area described above. More specifically, as illustrated in FIG. 1A, the solder wire 2 that is the base material is transported in the direction of arrow A though the approximate center section of the reaction area 6 that is defined by a helical shaped gas flow 4. At this time, radicalized organic phosphorus compound 5 is uniformly dispersed inside the reaction area 6, so due to the action of the helical shaped gas flow 4, the organic phosphorus compound 5 comes in contact evenly over the entire surface of the solder wire 2. As a result, the reaction between the radicalized organic phosphorus compound 5 and the metal of the solder wire 2 surface advances simultaneously at about the same reaction rate over the entire circumferential direction.

Incidentally, in the reaction area 6, the radicalized organic phosphorus compound is present in various states such as a monomer, half-polymer or polymer. Therefore, the form of the reaction between the radicalized organic phosphorus compound 5 and the metal of the solder wire 2 surface could be:
(i) a form in which the radicalized organic phosphorus compound 5 is polymerized after reacting with the metal of the solder wire 2 surface;
(ii) a form in which the radicalized organic phosphorus compound 5 reacts with the metal of the solder wire 2 surface while being polymerized; or
(iii) a form in which the radicalized organic phosphorus compound 5 reacts with the metal of the solder wire 2 surface after being polymerized.

### c) Transporting Speed of Solder Wire

The coated solder wire of the present invention is such that the thickness of the coating film is adjusted to be within the range 1 nm to 100 nm. This kind of thickness of coating film can be controlled by the amount of organic phosphorus compound that is introduced as coating material, the speed of the helical shaped gas flow, and the transporting speed of the solder wire. More specifically, the transporting speed of the solder wire in the coating step is preferably 1 m/min to 100 m/min, and more preferably 5 m/min to 80 m/min, and even more preferably 10 m/min to 50 m/min. When the transporting speed of the solder wire is less than 1 m/min, not only is there a possibility that the coating film will become too thick, the productivity decreases significantly. On the other hand, when the transporting speed is greater than 100 m/min, the thickness of the coating film becomes 1 nm or less, and there is a possibility that variation will occur in the thickness.

### 3. Die Bonding Method Using Coated Solder Wire

The coated solder wire of the present invention can be used for bonding various semiconductor elements to a substrate, and more specifically, can be used for bonding a wide variety of semiconductor elements such as discretes, integrated circuit (IC) chips, modules and the like to a substrate. In the following, a die bonding method will be explained in which the coated solder wire of the present invention is used to bond an IC chip to die section of a lead frame.

When performing die bonding using the coated solder wire of the present invention, the IC chip is kept level, so preferably high-melting-point particles are added to the solder wire. As the high-melting-point particles, preferably particles having a melting point that is 50°C or higher than the melting point of the solder wire is used; and more specifically, it is possible to use metal particles such as Cu, Ni and the like, oxide particles such as SiO₂ and the like, and carbide particles such as SiC and the like. Preferably, the average particle size of these high-melting-point particles is 1 µm to 70 µm. Moreover, the amount included of the high-melting-point particles is preferably about 1% by mass to 40% by mass with respect to the solder wire.

In typical die bonding, a heater unit is provided inside a semi-sealed chamber that is provided with an opening for supplying solder wire and semi-conductor elements, and a substrate is transported to this heater unit and heated. When doing this, an inert gas or a foaming gas (gas in which hydrogen as a reducing gas is mixed with an inert gas) is made to circulate inside the chamber. After that, solder is supplied to the substrate that has been heated to a specified temperature, the solder is melted, a semiconductor element is placed on top of this and by applying pressure, the substrate and the semiconductor element are bonded.

At this time, the solder wire waits in the heater unit in a state in which a mixed gas of heated inert gas and air is blown on the solder wire, so oxidation of the surface of the solder wire advances. Moreover, although inert gas is circulating, the inside of the chamber is not completely sealed, so oxidation also advances due to oxygen that flows into the chamber when solder wire is supplied.

In addition, in order to perform good bonding, the temperature of the heater unit must be set to a temperature that is about 30°C to 70°C higher than the melting point of the solder wire. Particularly, when using a high-melting-point solder such as a Pb type wire that includes Sn at 5% by mass, the temperature of the heater unit must be set to about 340°C to 380°C, and by using this kind of temperature setting, the oxidation of the solder wire advances even further.

In this kind of die bonding, by using the coated solder wire of the present invention instead of conventional solder wire, the action of the coating film is able to prevent oxidation when waiting and during melting. Moreover, the coated solder wire of the present invention has excellent wettability and bonding property (bonding strength) even when the heater temperature is low or changes, and it is possible to achieve bonding with very little occurrence of gaps easily and stably in production on an industrial scale. Therefore, the coated solder wire of the present invention can be suitably applied to substrates to which semiconductor elements will be bonded and that require high reliability, and to the manufacturing of devices that use such substrates.

### [Examples]

In the following, the present invention will be explained in further detail with reference to examples.

### [Manufacturing of Solder Wire]

As raw materials, Zn, Ag, Sn, Pb, Cu, Au, In, Al, Ni, Sb, Ge, Te and P having a purity of 99.9% or greater were prepared. In order to prevent variation in the composition of the obtained coated solder wire due to the sampling position, large flakes or bulky raw material were adjusted to a size of 3 mm or less by cutting or pulverizing.

Specified amounts were weighed out from the raw materials that were adjusted in this way, and put into graphite crucibles. The crucibles were placed in a high-frequency melting furnace, and in order to suppress oxidation, nitrogen was made to circulate at a rate of 0.7 L/min or greater per 1 kg of raw material, and in this state, the power to the melting furnace was turned ON and the raw materials were melted while stirring sufficiently with mixing rods so that localized variations in composition did not occur. After confirming that the raw materials were sufficiently melted, the power to the melting furnace was turned OFF, and the crucibles were quickly removed, then the obtained molten metals were poured into molds of the solder mother alloy, and solder mother alloy ingots having different compositions were obtained.

The molds used were the same as typical molds that are used when manufacturing the solder mother alloy. The respective solder mother alloy ingots were processed in an inert gas atmosphere and formed into wire shapes using an extrusion processing machine, and samples No. 1 to No. 30 of solder wire (0.76 mm diameter) were obtained. The compositions of these solder wires were measured using an ICP emission spectroscopic analyzer (ICPS-8100, manufactured by Shimadzu Corporation). The results are illustrated in Table 1.

### [Table 1]

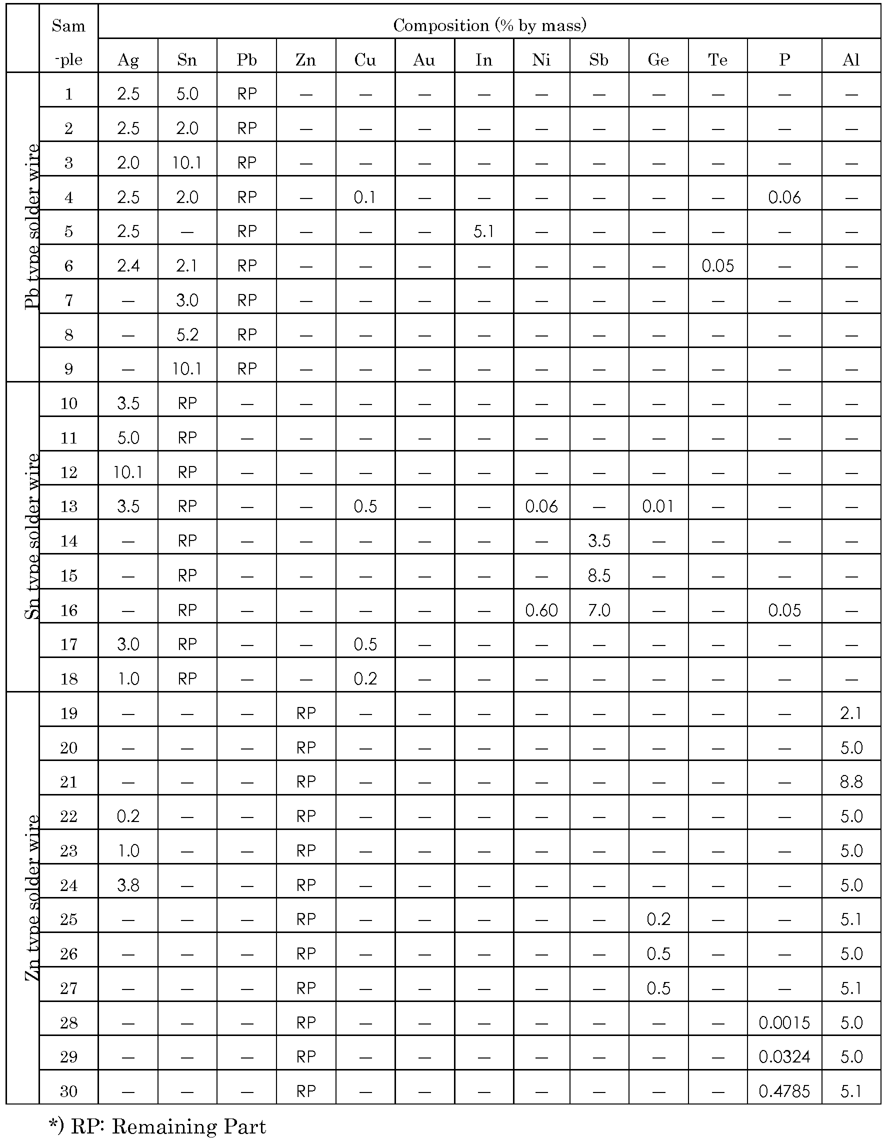

### (Example 1)

### [Manufacturing of Coated Solder Wire]

When winding the PB type solder wire of Sample No. 1 using a solder wire automatic winding machine (TM type winding machine, manufactured by Tanabe Manufacturing Co., Ltd.), a coating film that includes a phosphorus-containing compound was formed on the surface of the transported solder wire by the method illustrated in FIG. 1 using an atmospheric pressure polymerization processing machine (Plasma Polymer Labo System PAD-1, manufactured by Nihon Plasmatreat Inc.).

First, trimethyl phosphate (manufactured by Tokyo Chemical Industry Co., Ltd.) that was introduced via a carrier gas (N₂) was mixed with a reaction gas (N₂) that was plasmatized under atmospheric pressure, and by radicalizing the trimethyl phosphate, radicalized trimethyl phosphate was obtained (radicalization step).

### <Plasmatization Conditions>

- Oscillation frequency of the plasma generator: 21 kHz
- Output voltage of the generator: 280 V
- Pressure: Atmospheric pressure (1013.25 hPa)

On the other hand, nitrogen (N₂) was introduced into the machine as the helical shaped gas flow, and radicalized trimethyl phosphate was sprayed from the nozzle of the atmospheric pressure polymerization processing machine into this helical shaped gas flow, and by mixing the radicalized trimethyl phosphate with the helical shaped gas flow, a reaction area was formed (reaction area formation step).

In this state, by passing the solder wire through the approximate center section of the reaction area, a coating film was formed on the surface of the solder wire. When doing this, the reacted amount of radicalized organic phosphorus compound per 1 m of solder wire was adjusted to 0.050 g, and the transportation speed of the solder wire was adjusted to 10.0 m/min. These processing conditions are given in Table 2.

### [Evaluation of Coated Solder Wire]

The coated solder wire that was obtained as described above was evaluated according to items (a) to (d) below.

### (a) Measurement of the coating film thickness

The coated solder wire was cut along the lengthwise direction at a reference position (0°) and at positions rotated 90° and 180° with respect to the reference position, and the cross section of the coated solder wire at each rotated positions was observed using a TEM (transmission electron microscope HF-2000, manufactured by Hitachi High-Technologies Corporation), and the thickness of the coating film was measured. The results are given in Table 2.

### (b) Evaluation of the surface state

The surface state at the point when the coated wire was manufactured was observed using an optical microscope (ECLIPE M6600, manufactured by Nikon Corporation). As a result, the surface state was evaluated as being "Good (O)" when the state was mostly the same as when a coating film is not formed, and evaluated as being "Bad (X)" when discoloration was observed.

Moreover, a neutral salt spray test according to the standard JIS Z 2371 was performed on the coated solder wire for 7 days and the surface state was observed using an optical microscope. As a result, the surface state was evaluated as being "Good (O)" when the state was mostly the same as the initial state, and was evaluated as being "Bad (X)" when there was discoloration or the smoothness had deteriorated when compared with the initial state. These results are given in Table 3.

Observation of the initial surface state and observation of the surface state after the neutral salt spray test were both performed at a reference position (0°) and at positions rotated 90° and 180° with respect to the reference position.

### (c) Evaluation of wettability

After covering the heater section of an atmosphere controllable wettability tester (manufactured in-house) with a double cover, the heater temperature was set and heated to 340°C (50°C higher than the melting point of the coated solder wire), while nitrogen (N₂) flowed at a flow rate of 12 L/min from four locations around the heater unit. After confirming that the heater temperature had become stable, a Cu substrate (plate thickness: approximately 0.70 mm) was placed on the heater unit and heated for 25 seconds. In this state, the tip end of coated solder wire that was cut to 5 cm was place so as to come in contact with the top of the Cu substrate, then the Cu substrate was further heated for 25 seconds, and die bonding was performed. After that, the Cu substrate on which bonded solder was formed was removed from the heater unit and cooled at room temperature in a nitrogen atmosphere.

Bonded solder was also obtained for sample No. 1 of the non-coated Pb type solder wire using the same die bonding.

Using a microscope (MM-40, manufactured by Nikon Corporation), the length of the respective samples of bonded solder were measured in the direction in which the diameter in the plan view of the bonded solder was the largest, and taking the maximum diameter to be X, the diameter in the direction orthogonal to the extending direction of the maximum diameter X was measured, and that diameter was taken to be Y. Furthermore, the height of the bonded surface was measured, and that height was taken to be Z.

For the sample of bonded solder that was obtained from the non-coated Pb type solder wire of sample No. 1, the roundness Dₙ that is obtained from the equation: "Y/X", and the aspect ratio Aₙ that is found from the equation: "((X+Y)/2)/Z" were calculated. Moreover, for the sample of bonded solder that was obtained from the coated solder wire of Example 1, the roundness D_{c} and the aspect ratio A_{c} were similarly calculated.

Furthermore, the ratio (A_{c}/Aₙ) of the aspect ratio A_{c} of the coated solder wire with respect to the aspect ratio Aₙ that is found for the non-coated solder wire was calculated.

As a result, the ratio (A_{c}/Aₙ) was evaluated as being "Good (O)" when in the range 1.6 to 3.0, and of this range, was particularly evaluated as being "Excellent (Ex)" when in the range 1.8 to 2.5, evaluated at being "Bad (Δ)" when less than 1.6 and greater than 3.0, and evaluated as being "Failure (X)" when bonding was not possible. The results are given in Table 3.

### (d) Evaluation of the Heat Cycle Characteristic

One heat cycle was taken to be when the Cu substrate with bonded solder that was made according to the wettability evaluation above was cooled to -55°C and heated to +150°C, and after performing the heat cycle test 500 cycles, the entire Cu substrate was embedded in resin, then cut and polished and the bonded surface was observed using an SEM (scanning electron microscope S-4800, manufactured by Hitachi High-Technologies Corporation). As a result, the bonded surface was evaluated as being "Good (O)" when the bonded surface was maintained in the same state as the initial state, was evaluated as being "Bad (Δ)" when voids or cracking occurred inside the bonded solder, and was evaluated as being "Failure (X)" when there was separation of the bonded surface or when voids and cracking occurring inside the bonded solder became severe. The results are given in Table 3.

### (Examples 2 to 11, Comparative Examples 1 and 2)

Except for changing the coating material and the processing conditions as illustrated in Table 2, the coated solder wire was manufactured in the same way as in Example 1, and the evaluations of (a) to (d) above were performed. The results are given in Table 3.

### (Comparative Example 3)

When winding Pb type solder wire of Sample No. 1 using an automatic solder wire winding machine, a coating film that includes a phosphorus-containing compound was formed on the surface of the transported solder wire by the method illustrated in FIG. 2 using an atmospheric pressure polymerization processing machine (Plasma Polymer Labo System PAD-1, manufactured by Nihon Plasmatreat Inc.).

First, a transporting jig 7 that is able to prevent twisting of the solder wire 2 during transporting was fastened so that the surface 7a became the bottom surface side, then in this state, radicalized organic phosphorus compound 5 was sprayed from the nozzle 8 while transporting the solder wire 2 in the direction of arrow A and a coating film 3a was formed (refer to FIG. 2(A-1)). Next, the transporting jig 7 was rotated 120° so that surface 7b became the bottom surface side, after which a coating film 3b was formed in the same way (refer to FIG. 2(B-1)). Finally, the transporting jig 7 was rotated 120° so that surface 7c became the bottom surface side, after which a coating film 3c was formed in the same way (refer to FIG. 2(C-1)).

The evaluations of (a) to (d) above were performed for the coated solder wire that was obtained in this way. The results are given in Table 3.

### (Comparative Example 4)

When winding Pb type solder wire of Sample No. 1 using an automatic solder wire winding machine, coated solder wire was made by immersing the solder wire in a silicone coating agent (APZ6601, manufactured by Toray - Dow Corning Corporation) for 10 minutes, then drying at 120°C for 10 minutes.

The evaluations of (a) to (c) above were performed for the coated solder wire that was obtained in this way. The results are given in Table 3. In Comparative Example 4, the coated solder wire and Cu substrate could not be bonded in the wettability evaluation (c), so evaluation of the heat cycle characteristic (d) was not performed.

### (Comparative Example 5)

When winding Pb type solder wire of Sample No. 1 using an automatic solder wire winding machine, coated solder wire was made by immersing the solder wire in a fluorine-based coating agent (FG-3020C30, manufactured by Fluoro Technology Co., Ltd.) for 10 minutes, and then drying for 10 minutes in a cool breeze.

The evaluations of (a) to (c) above were performed for the coated solder wire that was obtained in this way. The results are given in Table 3. In Comparative Example 5, the coated solder wire and Cu substrate could not be bonded in the wettability evaluation (c), so evaluation of the heat cycle characteristic (d) was not performed.

### (Comparative Example 6)

Except for using hexamethyldisiloxane as the coating material and changing the processing conditions as illustrated in Table 2, coated solder wire was made in the same way as in Example 1, and the evaluations (a) to (d) above were performed. The results are given in Table 3.

### (Comparative Example 7)

Coating film was not formed on the Pb type solder wire of Sample No. 1, and the evaluation of the surface state (b) was performed. After the neutral salt spray test, the surface sate of the solder wire had deteriorated, and this solder wire had an overall inferior oxidation prevention function. The results are given in Table 3. Moreover, the shape of the bonded solder was indefinite, so the evaluation of wettability (c) and the evaluation of the heat cycle characteristic (d) could not be performed.

### (Examples 12 to 19)

Except for using the Pb type solder wire illustrated in Table 4 as the solder wire for the base material, a coated solder wire was made in the same way as in Example 1, and the evaluations (a) to (d) above were performed. The results are given in Table 4 and Table 5.

### (Comparative Examples 8 to 15)

A coating film was not formed on the same Pb type solder wires used in Examples 12 to 19, and the evaluations (a) to (d) above were performed. In each case, the evaluations were the same as in Comparative Example 7 above.

### (Examples 20 to 28)

Except for using Sn type solder wire as the solder wire that will be the base material, coated solder wire was made in the same way as in Example 1, and the evaluations (a) to (d) above were performed. The results are given in Table 4 and Table 5.

### (Comparative Examples 16 to 24)

A coating film was not formed on the same Sn type solder wires used in Examples 20 to 28, and the evaluations (a) to (d) above were performed. In each case, the evaluations were the same as in Comparative Example 7 above.

### (Examples 29 to 40)

Except for using Zn type solder wire as the solder wire that will be the base material, coated solder wire was made in the same way as in Example 1, and the evaluations (a) to (d) above were performed. The results are given in Table 4 and Table 5.

### (Comparative Examples 25 to 36)

A coating film was not formed on the same Zn type solder wires used in Examples 20 to 28, and the evaluations (a) to (d) above were performed. In each case, the evaluations were the same as in Comparative Example 7 above.

**[Table 2]**

| | Solder Wire No. | Coating Material | | Coating Method | Processing Conditions | | | Coating Thickness (nm) | | | |
|---|---|---|---|---|---|---|---|---|---|---|---|
| | | Type | Amount Introduced (g/m) | | Reaction Gas | Helical shaped gas flow | Transportation speed (m/min) | 0° | 90° | 180° | max-min |
| Ex. 1 | 1 | TMP | 0.050 | FIG. 1 | N₂ | N₂ | 10.0 | 8.9 | 8.5 | 7.7 | 1.2 |
| Ex. 2 | 1 | TMP | 0.250 | FIG. 1 | N₂ | N₂ | 10.0 | 45.1 | 44.6 | 45.5 | 0.9 |
| Ex. 3 | 1 | TMP | 0.550 | FIG. 1 | N₂ | N₂ | 1.0 | 97.2 | 98.5 | 99.3 | 2.1 |
| Ex. 4 | 1 | TMP | 0.150 | FIG. 1 | N₂ | N₂ | 5.0 | 25.6 | 24.3 | 25.1 | 1.3 |
| Ex. 5 | 1 | TMP | 0.030 | FIG. 1 | N₂ | N₂ | 50.0 | 5.5 | 4.8 | 4.3 | 1.2 |
| Ex. 6 | 1 | TMP | 0.006 | FIG. 1 | N₂ | N₂ | 100.0 | 1.2 | 1.5 | 1.3 | 0.3 |
| Ex. 7 | 1 | TMP | 0.050 | FIG. 1 | N₂ | Dry air | 10.0 | 9.4 | 10.1 | 8.6 | 1.5 |
| Ex. 8 | 1 | TMP | 0.050 | FIG. 1 | Dry air | N₂ | 10.0 | 9.2 | 8,5 | 7.8 | 1.4 |
| Ex. 9 | 1 | TMP | 0.050 | FIG. 1 | Dry air | Dry air | 10.0 | 9.1 | 10.8 | 10.5 | 1.7 |
| Ex. 10 | 1 | TEP | 0.050 | FIG. 1 | N₂ | N₂ | 10.0 | 8.3 | 9.1 | 9.7 | 1.4 |
| Ex. 11 | 1 | TEPT | 0.050 | FIG. 1 | N₂ | N₂ | 10.0 | 8.4 | 8.0 | 9.1 | 1.1 |
| CE 1 | 1 | TMP | 0.003 | FIG. 1 | N₂ | N₂ | 10.0 | 0.2 | 0.6 | 0.8 | 0.6 |
| CE 2 | 1 | TMP | 0.780 | FIG. 1 | N₂ | N₂ | 20.0 | 142.5 | 138.2 | 132.2 | 10.3 |
| CE 3 | 1 | TMP | 0.050 | FIG. 2 | N₂ | - | 10.0 | 9.1 | 3.2 | 1.2 | 7.9 |
| CE 4 | 1 | Si | - | Wet type | - | - | - | 11000 | 6000 | 9000 | - |
| CE 5 | 1 | F | - | Wet type | - | - | - | 72100 | 20010 | 45380 | - |
| CE 6 | 1 | HMDSO | 0.006 | FIG. 1 | N₂ | N₂ | 15.0 | 4.3 | 4.2 | 4.5 | 0.3 |
| CE 7 | 1 | - | - | - | - | - | - | - | - | - | - |

| | | | | | | | | | | | |
|---|---|---|---|---|---|---|---|---|---|---|---|
| *) CE: Comparative Example TMP: Trimethyl phosphate, TEP: Triethyl phosphate TEPT: Triethyl phosphite, HMDSO: Hexamethyldisiloxane | | | | | | | | | | | |

**[Table 3]**

| | Surface State Evaluation | | | | | | Roundness Y/X | Wettability and Bonding Property Evaluation | | | Heat Cycle Evaluation |
|---|---|---|---|---|---|---|---|---|---|---|---|
| | Initial | | | After Testing | | | | A_{c} | A_{c}/Aₙ | Evaluation | |
| | 0° | 90° | 180° | 0° | 90° | 180° | | | | | |
| Ex. 1 | ○ | ○ | ○ | ○ | ○ | ○ | 0.89 | 8.48 | 2.35 | EX | ○ |
| Ex. 2 | ○ | ○ | ○ | ○ | ○ | ○ | 0.90 | 8.95 | 2.48 | EX | ○ |
| Ex. 3 | ○ | ○ | ○ | ○ | ○ | ○ | 0.88 | 10.58 | 2.93 | ○ | ○ |
| Ex. 4 | ○ | ○ | ○ | ○ | ○ | ○ | 0.89 | 8.56 | 2.37 | EX | ○ |
| Ex. 5 | ○ | ○ | ○ | ○ | ○ | ○ | 0.92 | 7.26 | 2.01 | EX | ○ |
| Ex. 6 | ○ | ○ | ○ | ○ | ○ | ○ | 0.87 | 6.28 | 1.74 | ○ | ○ |
| Ex. 7 | ○ | ○ | ○ | ○ | ○ | ○ | 0.89 | 8.12 | 2.25 | EX | ○ |
| Ex. 8 | ○ | ○ | ○ | ○ | ○ | ○ | 0.90 | 8.23 | 2.28 | EX | ○ |
| Ex. 9 | ○ | ○ | ○ | ○ | ○ | ○ | 0.88 | 8.77 | 2.43 | EX | ○ |
| Ex. 10 | ○ | ○ | ○ | ○ | ○ | ○ | 0.91 | 8.45 | 2.34 | EX | ○ |
| Ex. 11 | ○ | ○ | ○ | ○ | ○ | ○ | 0.90 | 8.56 | 2.37 | EX | ○ |
| CE 1 | ○ | ○ | ○ | × | × | × | 0.86 | 3.16 | 1.05 | Δ | ○ |
| CE 2 | ○ | ○ | ○ | ○ | ○ | ○ | 0.87 | 4.52 | 1.50 | Δ | Δ |
| CE 3 | ○ | ○ | ○ | ○ | ○ | × | 0.85 | 3.40 | 1.13 | Δ | ○ |
| CE 4 | ○ | ○ | ○ | ○ | ○ | ○ | - | - | - | × | - |
| CE 5 | ○ | ○ | ○ | ○ | ○ | ○ | - | - | - | × | - |
| CE 6 | ○ | ○ | ○ | ○ | ○ | ○ | 0.86 | 3.25 | 1.08 | Δ | ○ |
| CE 7 | ○ | ○ | ○ | × | × | × | - | - | - | - | - |

**[Table 4]**

| | Solder Wire No. | Coating Material | | Coating Method | Processing Conditions | | | Coating Thickness (nm) | | | |
|---|---|---|---|---|---|---|---|---|---|---|---|
| | | Type | Amount Introduce d (g/m) | | Reaction Gas | Helical shaped gas flow | Transpor -tation speed (m/min) | 0° | 90° | 180° | max-min |
| Ex. 12 | 2 | TMP | 0.050 | FIG. 1 | N2 | N2 | 10.0 | 9.6 | 9.3 | 8.7 | 0.9 |
| Ex. 13 | 3 | TMP | 0.050 | FIG. 1 | N2 | N2 | 10.0 | 8.8 | 8.3 | 8.8 | 0.5 |
| Ex. 14 | 4 | TMP | 0.050 | FIG. 1 | N2 | N2 | 10.0 | 8.1 | 8.8 | 8.3 | 0.7 |
| Ex. 15 | 5 | TMP | 0.050 | FIG. 1 | N2 | N2 | 10.0 | 8.2 | 8.0 | 9.2 | 1.2 |
| Ex. 16 | 6 | TMP | 0.050 | FIG. 1 | N2 | N2 | 10.0 | 8.1 | 8.9 | 8.2 | 0.8 |
| Ex. 17 | 7 | TMP | 0.050 | FIG. 1 | N2 | N2 | 10.0 | 7.8 | 8.6 | 9.4 | 1.6 |
| Ex. 18 | 8 | TMP | 0.050 | FIG. 1 | N2 | N2 | 10.0 | 8.8 | 8.6 | 8.8 | 0.2 |
| Ex. 19 | 9 | TMP | 0.050 | FIG. 1 | N2 | N2 | 10.0 | 7.9 | 7.9 | 9.5 | 1.6 |
| Ex. 20 | 10 | TMP | 0.050 | FIG. 1 | N2 | N2 | 10.0 | 8.7 | 8.2 | 9.6 | 1.4 |
| Ex. 21 | 11 | TMP | 0.050 | FIG. 1 | N2 | N2 | 10.0 | 8.8 | 9.5 | 8.8 | 0.7 |
| Ex. 22 | 12 | TMP | 0.050 | FIG. 1 | N2 | N2 | 10.0 | 8.3 | 9.2 | 8.1 | 1.1 |
| Ex. 23 | 13 | TMP | 0.050 | FIG. 1 | N2 | N2 | 10.0 | 9.2 | 8.8 | 8.2 | 1.0 |
| Ex. 24 | 14 | TMP | 0.050 | FIG. 1 | N2 | N2 | 10.0 | 8.2 | 8.5 | 8.1 | 0.4 |
| Ex. 25 | 15 | TMP | 0.050 | FIG. 1 | N2 | N2 | 10.0 | 9.4 | 9.2 | 7.8 | 1.6 |
| Ex. 26 | 16 | TMP | 0.050 | FIG. 1 | N2 | N2 | 10.0 | 8.8 | 8.5 | 8.8 | 0.3 |
| Ex. 27 | 17 | TMP | 0.050 | FIG. 1 | N2 | N2 | 10.0 | 9.5 | 8.2 | 7.9 | 1.6 |
| Ex. 28 | 18 | TMP | 0.050 | FIG. 1 | N2 | N2 | 15.0 | 8.8 | 8.3 | 8.5 | 0.5 |
| Ex. 29 | 19 | TMP | 0.050 | FIG. 1 | N2 | N2 | 10.0 | 8.7 | 8.9 | 9.3 | 0.6 |
| Ex. 30 | 20 | TMP | 0.050 | FIG. 1 | N2 | N2 | 10.0 | 9.2 | 8.3 | 8.8 | 0.9 |
| Ex. 31 | 21 | TMP | 0.050 | FIG. 1 | N2 | N2 | 10.0 | 8.5 | 9.5 | 9.6 | 1.1 |
| Ex. 32 | 22 | TMP | 0.050 | FIG. 1 | N2 | N2 | 10.0 | 7.8 | 8.4 | 9.1 | 1.3 |
| Ex. 33 | 23 | TMP | 0.050 | FIG. 1 | N2 | N2 | 10.0 | 8.8 | 8.5 | 7.9 | 0.9 |
| Ex. 34 | 24 | TMP | 0.050 | FIG. 1 | N2 | N2 | 10.0 | 9.2 | 9.6 | 9.3 | 0.4 |
| Ex. 35 | 25 | TMP | 0.050 | FIG. 1 | N2 | N2 | 10.0 | 8.8 | 8.6 | 8.1 | 0.7 |
| Ex. 36 | 26 | TMP | 0.050 | FIG. 1 | N2 | N2 | 10.0 | 9.5 | 9.2 | 8.4 | 1.1 |
| Ex. 37 | 27 | TMP | 0.050 | FIG. 1 | N2 | N2 | 10.0 | 7.9 | 8.3 | 8.6 | 0.7 |
| Ex. 38 | 28 | TMP | 0.050 | FIG. 1 | N2 | N2 | 10.0 | 7.7 | 8.6 | 8.2 | 0.9 |
| Ex. 39 | 29 | TMP | 0.050 | FIG. 1 | N2 | N2 | 10.0 | 9.4 | 8.9 | 8.3 | 1.1 |
| Ex. 40 | 30 | TMP | 0.050 | FIG. 1 | N2 | N2 | 10.0 | 9.1 | 8.5 | 9.4 | 0.9 |

| | | | | | | | | | | | |
|---|---|---|---|---|---|---|---|---|---|---|---|
| *) TMP: Trimethyl phosphate | | | | | | | | | | | |

**[Table 5]**

| | Surface State Evaluation | | | | | | Roundness Y/X | Wettability and Bonding Property Evaluation | | | Heat Cycle Evaluation |
|---|---|---|---|---|---|---|---|---|---|---|---|
| | Initial | | | After Testing | | | | A_{c} | A_{c}/Aₙ | Evaluation | |
| | 0° | 90° | 180° | 0° | 90° | 180° | | | | | |
| Ex. 12 | ○ | ○ | ○ | ○ | ○ | ○ | 0.90 | 8.31 | 2.38 | EX | ○ |
| Ex. 13 | ○ | ○ | ○ | ○ | ○ | ○ | 0.91 | 8.21 | 2.34 | EX | ○ |
| Ex. 14 | ○ | ○ | ○ | ○ | ○ | ○ | 0.89 | 8.19 | 2.43 | EX | ○ |
| Ex. 15 | ○ | ○ | ○ | ○ | ○ | ○ | 0.88 | 7.72 | 2.45 | EX | ○ |
| Ex. 16 | ○ | ○ | ○ | ○ | ○ | ○ | 0.90 | 8.61 | 2.32 | EX | ○ |
| Ex. 17 | ○ | ○ | ○ | ○ | ○ | ○ | 0.91 | 8.38 | 2.36 | EX | ○ |
| Ex. 18 | ○ | ○ | ○ | ○ | ○ | ○ | 0.89 | 7.99 | 2.37 | EX | ○ |
| Ex. 19 | ○ | ○ | ○ | ○ | ○ | ○ | 0.88 | 8.27 | 2.41 | EX | ○ |
| Ex. 20 | ○ | ○ | ○ | ○ | ○ | ○ | 0.91 | 8.58 | 2.39 | EX | ○ |
| Ex. 21 | ○ | ○ | ○ | ○ | ○ | ○ | 0.92 | 8.70 | 2.41 | EX | ○ |
| Ex. 22 | ○ | ○ | ○ | ○ | ○ | ○ | 0.90 | 7.90 | 2.35 | EX | ○ |
| Ex. 23 | ○ | ○ | ○ | ○ | ○ | ○ | 0.89 | 8.19 | 2.36 | EX | ○ |
| Ex. 24 | ○ | ○ | ○ | ○ | ○ | ○ | 0.88 | 8.68 | 2.34 | EX | ○ |
| Ex. 25 | ○ | ○ | ○ | ○ | ○ | ○ | 0.89 | 7.95 | 2.36 | EX | ○ |
| Ex. 26 | ○ | ○ | ○ | ○ | ○ | ○ | 0.90 | 7.70 | 2.37 | EX | ○ |
| Ex. 27 | ○ | ○ | ○ | ○ | ○ | ○ | 0.91 | 8.23 | 2.35 | EX | ○ |
| Ex. 28 | ○ | ○ | ○ | ○ | ○ | ○ | 0.89 | 8.37 | 2.37 | EX | ○ |
| Ex. 29 | ○ | ○ | ○ | ○ | ○ | ○ | 0.91 | 6.98 | 2.35 | EX | ○ |
| Ex. 30 | ○ | ○ | ○ | ○ | ○ | ○ | 0.89 | 6.53 | 2.45 | EX | ○ |
| Ex. 31 | ○ | ○ | ○ | ○ | ○ | ○ | 0.88 | 6.77 | 2.45 | EX | ○ |
| Ex. 32 | ○ | ○ | ○ | ○ | ○ | ○ | 0.92 | 6.43 | 2.33 | EX | ○ |
| Ex. 33 | ○ | ○ | ○ | ○ | ○ | ○ | 0.93 | 6.75 | 2.32 | EX | ○ |
| Ex. 34 | ○ | ○ | ○ | ○ | ○ | ○ | 0.89 | 6.77 | 2.38 | EX | ○ |
| Ex. 35 | ○ | ○ | ○ | ○ | ○ | ○ | 0.90 | 6.75 | 2.39 | EX | ○ |
| Ex. 36 | ○ | ○ | ○ | ○ | ○ | ○ | 0.87 | 6.73 | 2.28 | EX | ○ |
| Ex. 37 | ○ | ○ | ○ | ○ | ○ | ○ | 0.91 | 6.65 | 2.45 | EX | ○ |
| Ex. 38 | ○ | ○ | ○ | ○ | ○ | ○ | 0.92 | 6.79 | 2.40 | EX | ○ |
| Ex. 39 | ○ | ○ | ○ | ○ | ○ | ○ | 0.89 | 6.65 | 2.45 | EX | ○ |
| Ex. 40 | ○ | ○ | ○ | ○ | ○ | ○ | 0.90 | 6.76 | 2.43 | EX | ○ |

### [Evaluation Results]

As illustrated in Table 2 to Table 5, for the coated solder wires of Examples 1 to 40, it was confirmed that the thicknesses were within the range 1 nm to 100 nm, the coating films included mainly a phosphorus-containing compound, and there was little variation in the film thicknesses of the coating films. Particularly, when comparing the results of the coated solder wire of Example 1 and coated solder wire of Comparative Example 3, it was confirmed that for the coated solder wire of the present invention, uniformity of the coating was dramatically improved.

Moreover, for the coated solder wires of Examples 1 to 40, it was confirmed that there was hardly any change in the surface state before and after a neutral salt spray test, and even when compared with any of the Comparative Examples 8 to 36 that were not coated, it was confirmed that oxidation resistance was excellent. Furthermore, for the bonded solder that was obtained by die bonding using the coated solder wires of Examples 1 to 40, it was confirmed that even when the bonding temperature was at a low temperature of 340°C, when compared with any of the Comparative Examples 8 to 36 that were not coated, the wettability, bonding property and heat cycle were evaluated as being good.

In addition, the processing time in Example 1 was 1/3 or less than the processing time in Comparative Example 3. Therefore, with the manufacturing method of the present invention, it was confirmed that productivity of a coated solder wire is greatly improved. From the results of the Examples above the advantageous effects of the present invention are clear.

### Explanation of Reference Numbers

1 Coated solder wire
2 Solder wire
3, 3a, 3b, 3c Coating film
4 Helical shaped gas flow
5 Radicalized organic phosphorus compound
6 Reaction area
7 Transporting jig
7a, 7b, 7c Transporting jig surface
8 Nozzle
A Transporting direction of solder wire

## Claims

1. Coated solder wire, comprising:
solder wire, and
a coating film that includes a phosphorus-containing compound that is formed on the surface of the solder wire, and that has a thickness within the range of 1 nm to 100 nm.

2. The coated solder wire according to Claim 1, wherein the difference between the maximum value and the minimum value of the coating film is 2.5 nm or less.

3. The coated solder wire according to Claim 1 or Claim 2, wherein
for bonded solder that is obtained by bonding the coated solder wire at a bonding temperature of 340°C to 350°C, when the maximum diameter in the plan view of the bonded solder is taken to be X, the diameter in a direction orthogonal to the extending direction of the maximum diameter X is taken to be Y, and the height of the bonded solder is taken to be Z, the aspect ratio that is found by the equation ((X+Y)/2)/Z is taken to be A_{c}, and for uncoated solder wire that has the same composition as the solder wire, when the aspect ratio that is found in the same way as the coated solder wire is taken to be Aₙ, the ratio (A_{c}/Aₙ) of the aspect ratio A_{c} of the coated solder wire with respect to the aspect ratio Aₙ of the non-coated solder wire is within the range 1.6 to 3.0.

4. The coated solder wire according to any one of Claims 1 to 3, wherein the solder wire is made from a solder alloy that includes Pb at 80% by mass or more, and one or more type of secondary element that is selected from among the group of Sn, Ag, Cu, In, Te and P, with the total amount of Pb and the secondary element included being 95% by mass or more.

5. The coated solder wire according to any one of Claims 1 to 3, wherein the solder wire is made from a solder alloy that includes Sn at 80% by mass or more, and one or more type of secondary element that is selected from among the group of Ag, Sb, Cu, Ni, Ge and P, with the total amount of Sn and the secondary element included being 95% by mass or more.

6. The coated solder wire according to any one of Claims 1 to 3, wherein the solder wire is made from a solder alloy that includes Zn at 90% by mass or more, Al at no less than 2.0% by mass and no greater than 9.0% by mass, and one or more type of third element that is selected from among the group of Ag, Ge and P, and when Ag is included, Ag is included at no less than 0.1% by mass and no greater than 4.0% by mass, and when Ge is included, Ge is included at no less than 0.01% by mass and no more than 2.00% by mass, and when P is included, P is included at no greater than 0.5000% by mass.

7. A manufacturing method for coated solder wire, comprising:
a radicalization step for forming a radicalized organic phosphorus compound by mixing a reaction gas that is plasmatized under atmospheric pressure and an organic phosphorus compound that is introduced via a carrier gas, and radicalizing the organic phosphorus compound;
a reaction area formation step for forming a reaction area that is defined by a helical shaped gas flow and in which the radicalized organic phosphorus compound is uniformly dispersed; and
a coating step for forming a 1 nm to 100 nm thick coating film that includes a phosphorus-containing compound on the surface of a solder wire by transporting the solder wire inside the reaction area and causing the radicalized organic phosphorus compound to react with metal on the surface of the solder wire.

8. The manufacturing method for coated solder wire according to Claim 7, wherein in the reaction area formation step, the reaction area is formed by mixing the radicalized organic phosphorus compound in a pre-introduced helical shaped gas flow.

9. The manufacturing method for coated solder wire according to Claim 7 or Claim 8, wherein the helical shaped gas flow is formed by using at least one type of gas selected from among the group argon, helium, nitrogen, oxygen and air.

10. The manufacturing method for coated solder wire according to any one of Claims 7 to 9, wherein at least one type that is selected from among trimethyl phosphate, triethyl phosphate, tributyl phosphate, tripentyl phosphate, bis (2-ethylhexyl) hydrogenphosphate, triphenyl phosphate, trimethyl phosphite, triethyl phosphite, tributyl phosphite, tripentyl phosphite, bis (2-nonylphenyl) hydrogenphosphite, and triphenyl phosphite is used as the organic phosphorus compound.

11. The manufacturing method for a coated solder wire according to any one of Claims 7 to 10, wherein at least one kind of gas that is selected from among the group argon, helium, nitrogen, oxygen and air is used as the reaction gas.

12. The manufacturing method for a coated solder wire according to any one of Claims 7 to 11, wherein at least one kind of gas that is selected from among the group argon, helium, and nitrogen is used as the carrier gas.

13. The manufacturing method for a coated solder wire according to any one of Claims 7 to 12, wherein in the radicalization step the organic phosphorus compound is radicalized by an atmospheric-pressure polymerization processing apparatus.

14. The manufacturing method for a coated solder wire according to any one of Claims 7 to 13, wherein in the radicalization step the amount of the organic phosphorus compound that is introduced per 1 m of solder wire is 0.005g to 0.560g.

15. The manufacturing method for a coated solder wire according to any one of Claims 7 to 14, wherein the transporting speed for transporting the solder wire in the coating step is 1 m/min to 100 m/min.
